Europäisches Patentamt

European Patent Office

Office européen des brevets

(19)

(11) **EP 1 027 644 B1**

(12) **FASCICULE DE BREVET EUROPEEN**

(45) Date de publication et mention
de la délivrance du brevet:
**26.09.2001   Bulletin 2001/39**

(21) Numéro de dépôt: **98950181.2**

(22) Date de dépôt: **23.10.1998**

(51) Int Cl.⁷: **G06F 9/38**

(86) Numéro de dépôt international:
**PCT/FR98/02267**

(87) Numéro de publication internationale:
**WO 99/23552 (14.05.1999 Gazette 1999/19)**

(54) **MICROPROCESSEUR, NOTAMMENT POUR CARTE A PUCE ET PROCEDE DE TRAITEMENT D'UNE INSTRUCTION**

MIKROPROZESSOR, INSBESONDERE FÜR CHIPKARTE UND
BEFEHLSVERARBEITUNGSVERFAHREN

MICROPROCESSOR, IN PARTICULAR FOR SMART CARDS AND METHOD OF EXECUTING AN
INSTRUCTION

(84) Etats contractants désignés:
**CH DE ES FR GB IT LI NL**

(30) Priorité:  **03.11.1997  FR 9713759**

(43) Date de publication de la demande:
**16.08.2000   Bulletin 2000/33**

(73) Titulaire: **Inside technologies**
**69930 Saint-Clément-les-Places (FR)**

(72) Inventeurs:
 • **BOUYOUX, Eric**
   **F-13320 Bouc Bel Air (FR)**
 • **CHARRAT, Bruno, Bâtiment C, Les Héliades**
   **F-13090 Aix en Provence (FR)**
 • **COMMERCIAL, Sean, Bâtiment D**
   **F-13100 Aix en Provence (FR)**

 • **PANGAUD, Nicolas, Porte B**
   **F-13090 Aix en Provence (FR)**

(74) Mandataire: **Marchand, André**
   **OMNIPAT,**
   **24 Place des Martyrs de la Résistance**
   **13100 Aix-en-Provence (FR)**

(56) Documents cités:
   **EP-A- 0 378 816        EP-A- 0 438 126**

 • **JOUPPI N P: "THE NONUNIFORM
   DISTRIBUTION OF INSTRUCTION-LEVEL AND
   MACHINE PARALLELISM AND ITS EFFECT ON
   PERFORMANCE" IEEE TRANSACTIONS ON
   COMPUTERS, vol. 38, no. 12, 1 décembre 1989,
   pages 1645-1658, XP000096380**

**Description**

La présente invention concerne un microprocesseur destiné notamment mais non exclusivement à être intégré dans une carte à puce, et plus particulièrement dans une carte à puce du type inductif sans contact.

Les cartes à puce sans contact inductives, alimentées par induction électromagnétique, doivent répondre à des contraintes techniques contradictoires. D'une part, leurs ressources en énergie électrique sont faibles et dépendent de la distance entre leur bobine d'antenne et la bobine d'alimentation d'un lecteur de carte. Cette distance, de quelques centimètres, peut varier fortement en fonction des mouvements de l'utilisateur de sorte que la tension d'alimentation reçue par induction peut fortement fluctuer et devenir très faible. D'autre part, les cartes à puce sans contact doivent offrir une vitesse de fonctionnement élevée garantissant un traitement rapide des transactions électroniques. Par exemple, une carte à puce du type badge électronique utilisée pour le contrôle d'accès est présentée par l'utilisateur devant une borne de contrôle. La période de présentation de la carte devant la borne doit être courte, de quelques millisecondes environ. Pendant cette période, la carte est alimentée électriquement par induction et doit procéder à diverses opérations comme la production et l'envoi d'un code d'authentification, l'envoi d'un numéro d'identification, éventuellement l'enregistrement dans sa mémoire de l'événement "demande d'ouverture de porte", de la date, du lieu,...

Or, l'augmentation de la vitesse de fonctionnement d'un circuit intégré, notamment de technologie CMOS, va de pair avec une augmentation de la consommation électrique. Un microprocesseur de carte à puce sans contact doit donc être rapide tout en consommant peu de courant.

Jusqu'à présent, on a utilisé dans les cartes à puce pourvues de contacts des microprocesseurs de conception simple mais ancienne, dont le seul avantage est en définitive d'être d'un coût de revient réduit et d'un faible encombrement en termes de surface de silicium. Avec l'apparition des cartes à puce sans contact, ces microprocesseurs apparaissent comme désuets et impropres à satisfaire les contraintes mentionnées ci-dessus.

On connaît par ailleurs des microprocesseurs sophistiqués du type pipeline, c'est-à-dire à chevauchement d'instructions, dont l'avantage est de fonctionner à grande vitesse. Toutefois, ces microprocesseurs sont d'une complexité, d'un encombrement et d'un coût de revient qui les rendent impropres à être intégrés dans des cartes à puce.

La présente invention a pour objectif de prévoir un microprocesseur qui soit à la fois de conception simple, de faible encombrement et de faible consommation, tout en offrant une grande rapidité de traitement des instructions d'un programme.

Pour atteindre cet objectif, l'idée de la présente invention est de réaliser un microprocesseur de type pipeline, afin de bénéficier des avantages du chevauchement d'instructions, mais dans lequel le traitement des instructions d'un programme est fait en un minimum de cycles pipeline, avec intervention d'un nombre minimum d'étages pipeline, et de la façon la plus simple, afin de réduire le nombre de portes logiques simultanément activées et la consommation électrique.

Plus particulièrement, la présente invention telle qu'exposée dans la revendication 1 prévoit un microprocesseur pipeline comprenant un premier étage pipeline comprenant des moyens de lecture et de décodage d'instructions d'un programme enregistré dans une mémoire, un deuxième étage pipeline contigu au premier étage pipeline, comprenant deux secteurs activés l'un après l'autre pendant des demi-cycles complémentaires d'un signal d'horloge du microprocesseur, le premier secteur comprenant des moyens pour lire des données contenues dans deux registres d'une banque de registres du microprocesseur et réaliser une opération sur les données conformément à une instruction reçue au cycle d'horloge précédent par le premier étage pipeline, le deuxième secteur comprenant des moyens pour enregistrer le résultat de l'opération dans un registre de la banque de registres.

Selon un mode de réalisation, le premier étage pipeline comprend deux secteurs activés pendant des demi-cycles complémentaires du signal d'horloge, le premier secteur du premier étage pipeline comprenant des moyens de lecture des instructions dans la mémoire, le deuxième secteur du premier étage pipeline comprenant des moyens de décodage des instructions.

Selon un mode de réalisation, le premier secteur du deuxième étage pipeline comprend une unité arithmétique et logique et un circuit à décalage.

Selon un mode de réalisation, le premier secteur du deuxième étage pipeline comprend des moyens pour réaliser en un demi-cycle d'horloge la concaténation d'un bit d'un premier mot binaire avec des bits d'un deuxième mot binaire.

Selon un mode de réalisation, les moyens de lecture et de décodage sont agencés pour décoder des instructions compactes comprenant un code instruction, une adresse d'un premier registre et une adresse d'un second registre de la banque de registres.

La présente invention concerne également un microprocesseur pipeline comprenant des moyens de lecture et des moyens de décodage d'instructions d'un programme enregistré dans une mémoire, une banque de registre et des moyens de calcul et de traitement de données, dans lequel les moyens de lecture et les moyens de décodage sont agencés dans un premier étage pipeline, les moyens de calcul et de traitement sont agencés dans un premier secteur d'un deuxième étage pipeline contigu au premier étage pipeline, le premier secteur étant activé pendant un premier demi-cycle d'un signal d'horloge du microprocesseur, la banque de registre est agencée en lecture dans le premier secteur du deuxième étage pipeline, et en écriture dans un deuxième secteur du deuxième étage pipeline, le deuxième secteur étant activé pendant un deuxième demi-cycle d'horloge.

Selon un mode de réalisation, la mémoire est agencée en écriture dans le deuxième secteur du deuxième étage pipeline.

Selon un mode de réalisation, les moyens de calcul et de traitement comprennent des moyens pour réaliser en un demi-cycle d'horloge une opération de concaténation d'un bit d'un premier mot binaire avec des bits d'un deuxième mot binaire.

La présente invention telle qu'exposée dans la revendication 7 concerne également un procédé de traitement d'une instruction lue dans une mémoire par un microprocesseur comprenant une banque de registres, des moyens de décodage de l'instruction, et des moyens d'exécution de l'instruction, comprenant une première étape d'extraction d'une première adresse, d'une deuxième adresse, et d'un code opération contenus dans l'instruction, d'une durée maximale d'un cycle d'horloge du microprocesseur, une deuxième étape de lecture simultanée d'un premier et d'un second registres de la banque de registres identifiés par les adresses extraites de l'instruction au cours de la première étape, et de réalisation à partir du contenu des registres d'une opération arithmétique ou logique identifiée par le code opération de l'instruction, d'une durée d'un demi-cycle d'horloge, et une troisième étape d'enregistrement du résultat de l'opération dans un registre de la banque de registres, d'une durée d'un demi-cycle d'horloge.

Selon un mode de réalisation, le résultat est enregistré dans l'un des premier et second registres.

Ces caractéristiques et avantages ainsi que d'autres de la présente invention seront exposées plus en détail dans la description suivante de l'architecture générale et d'un mode de réalisation du microprocesseur selon l'invention, faite à titre non limitatif en relation avec les figures jointes parmi lesquelles :

- la figure 1 représente schématiquement l'architecture générale d'un microprocesseur selon l'invention,
- la figure 2 représente de façon plus détaillée un exemple de réalisation du microprocesseur de la figure 1, et
- la figure 3 représente la structure d'un circuit représenté sous forme de bloc en figure 2.

**Architecture générale d'un microprocesseur selon l'invention**

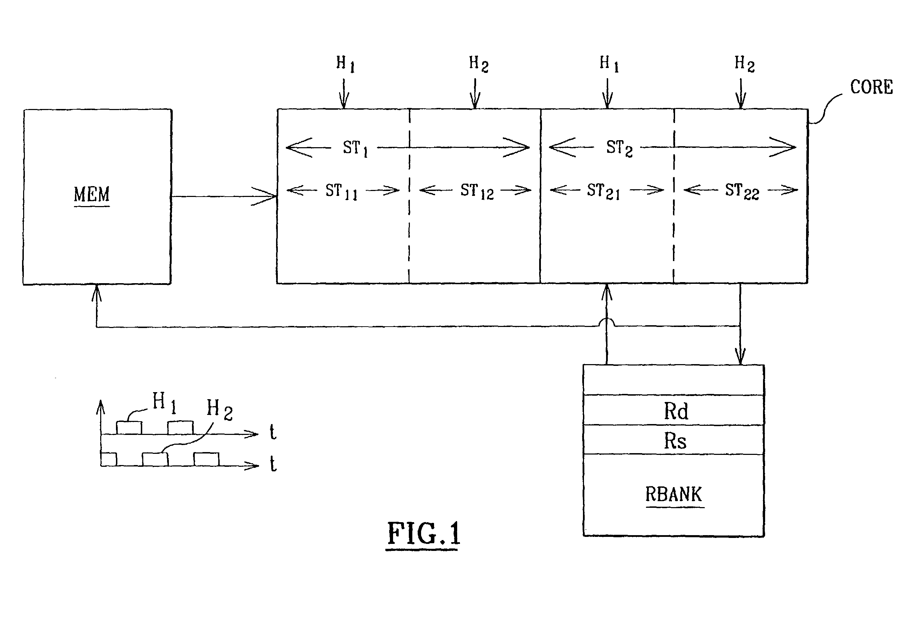

La figure 1 représente l'architecture générale d'un microprocesseur MP selon l'invention. Le microprocesseur est du type pipeline et fonctionne par chevauchement d'instructions. Le microprocesseur est agencé pour exécuter des instructions compactes se présentant ici sous le format suivant :

| $CODE_{OP}$ | ADRd | ADRs | - |
|---|---|---|---|

Ces instructions, codées ici sur 16 bits, comprennent un code $CODE_{OP}$ de l'opération OP à exécuter, codé sur 4 bits, l'adresse ADRd d'un registre Rd de destination du résultat, sur 4 bits, et l'adresse ADRs d'un registre source Rs, sur 4 bits (ici, le dernier champ de l'instruction n'est pas utilisé). L'opération est par exemple l'addition ADD (additionner Rs et Rd et stocker le résultat dans Rd), la soustraction SUB (soustraire Rs à Rd et stocker le résultat dans Rd), le OU logique (stocker dans Rd le résultat de Rs OU Rd), le ET logique, etc..

Le microprocesseur comprend classiquement un coeur CORE, une banque de registre RBANK et une mémoire programme MEM. Selon l'invention, le coeur CORE comprend un étage ST1 de lecture et décodage des instructions d'un programme stocké dans la mémoire MEM, et un étage ST2 d'exécution de ces instructions. Chaque étage est divisé en deux secteurs ST11/ST12, respectivement ST21/ST22, fonctionnant en alternance. Le secteur ST11 est affecté à la lecture (cycle "fetch") des instructions, et le secteur ST12 au décodage des instructions. Le secteur ST21 est affecté à la lecture de registres dits "source" Rs et "destination" Rd dans la banque RBANK, et à l'exécution de l'opération désignée par le code $CODE_{OP}$ des instructions. Le secteur ST22 est affecté à l'enregistrement du résultat dans le registre destination Rd ou dans la mémoire MEM.

Les premiers secteurs ST11, ST21 de chaque étage sont activés par le signal d'horloge H1 du microprocesseur et les seconds secteurs ST21, ST22 sont activés par un signal H2 déphasé de 180°. Pour fixer les idées, les signaux H1, H2 sont représentés en figure 1. Ainsi, chaque étage pipeline ST1, ST2 fonctionne en un cycle d'horloge H1 et chaque secteur fonctionne en un demi-cycle d'horloge. Le fonctionnement du microprocesseur est illustré par le tableau 1 ci-après, qui décrit une séquence de traitement deux instructions successives.

Tableau 1

| Cycle pipeline | | Cycle pipeline | | Cycle pipeline | |
|---|---|---|---|---|---|
| 1/2 cycle | 1/2 cycle | 1/2 cycle | 1/2 cycle | 1/2 cycle | 1/2 cycle |
| H1=1 | H2=1 | H1=1 | H2=1 | H1=1 | H2=1 |
| étape 1.1 | étape 1.2 | étape 1.3 | étape 1.4 | | |
| | | étape 2.1 | étape 2.2 | étape 2.3 | étape 2.4 |

La première instruction est traitée en quatre étapes 1.1 à 1.4, et la deuxième instruction en quatre étapes 2.1 à 2.4. Les étapes 1.1, 2.1 sont des étapes de lecture des instructions et sont exécutées dans le secteur ST11. Les étapes 1.2, 2.2 sont des étapes de décodage des instructions et sont exécutées dans le secteur ST12. Les étapes 1.3, 2.3, exécutées dans le secteur ST21, sont des étapes de lecture des registres Rd, Rs et de réalisation d'une opération sur le contenu de ces registres, conformément au code $CODE_{OP}$ de l'instruction. Enfin, les étapes 1.4, 2.4 sont des étapes d'enregistrement du résultat dans le registre Rd, exécutées dans le secteur ST21.

Ainsi, les instructions sont exécutées en un cycle d'horloge pipeline lorsque la chaîne pipeline est amorcée. Les secteurs ST11, ST21 sont actifs simultanément, puis les secteurs ST12, ST22. Cette architecture de microprocesseur présente donc l'avantage d'être rapide. Elle est également simple à mettre en oeuvre et d'un encombrement réduit, comme on le verra ci-après.

## Exemple de réalisation d'un microprocesseur selon l'invention

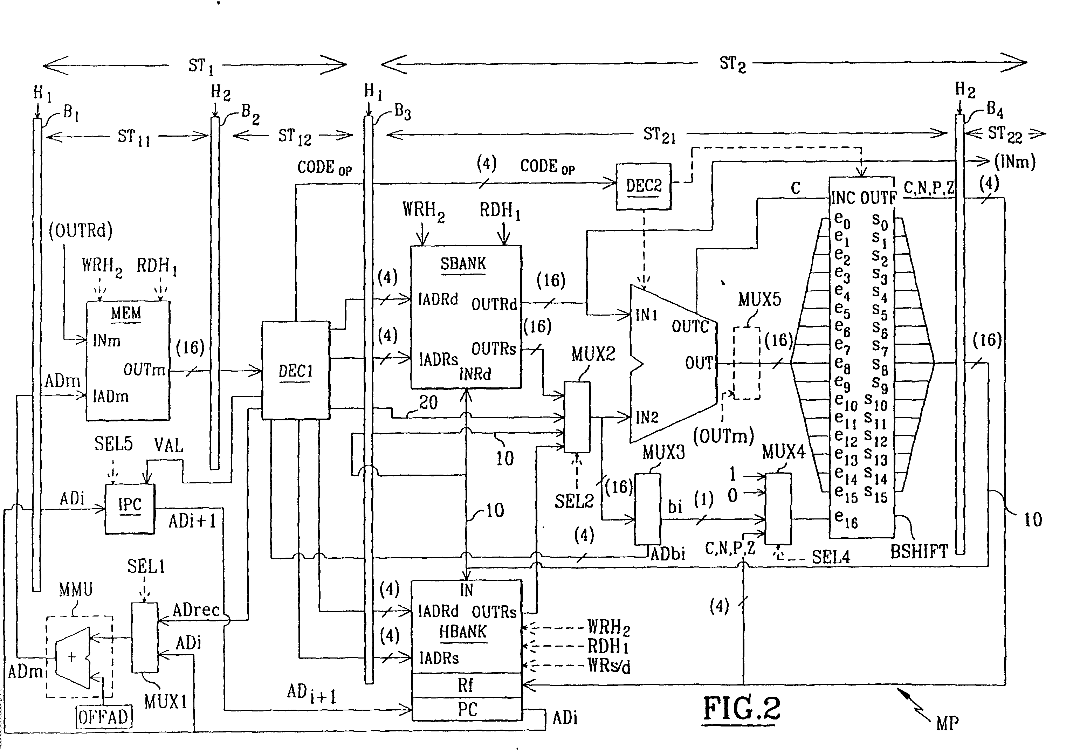

La figure 2 représente un exemple de réalisation du microprocesseur MP. Sur cette figure, les étages pipeline ST1, ST2 sont délimités par des registres B1, B3. Le registre B1 est par exemple un tampon trois états ("buffer tristate") transparent quand le signal d'horloge H1 est à 1. Le registre B3 est par exemple un registre à verrouillage ("latch") déclenché par le passage à 1 du signal d'horloge H1. Les secteurs ST11, ST12 de l'étage ST1 sont délimités par un registre B2, par exemple un registre à verrouillage, déclenché par le passage à 1 du signal H2. Les secteurs ST21, ST22 sont délimités par un registre B4, par exemple un tampon trois états transparent quand le signal H2 est à 1. Ainsi, le signal d'horloge H1 synchronise le transfert des données de l'étage ST1 vers l'étage ST2, et le signal déphasé H2 synchronise le transfert des données du premier secteur ST11, ST21 vers le deuxième secteur ST12, ST22 de chaque étage pipeline.

Le coeur du microprocesseur, tel que représenté, comprend essentiellement un décodeur DEC1, une unité de calcul arithmétique et logique ALU et un circuit à décalage BSHIFT. Le décodeur DEC1 est agencé dans le secteur ST12 alors que l'unité ALU et le circuit BSHIFT sont agencés dans le secteur ST21. On distingue par ailleurs la mémoire programme MEM déjà décrite, ainsi qu'une banque de registres se présentant ici sous la forme d'une banque SBANK de registres software et une banque HBANK de registres hardware. Dans un souci de simplification de la figure, la mémoire MEM et les banques de registres sont représentées au sein des étages pipelines ST1, ST2 du microprocesseur, et sont donc mélangées aux éléments du coeur.

Le décodeur DEC1 assure le décodage des instructions contenues dans la mémoire et le séquencement des étapes internes de traitement de ces instructions. A cet effet, le décodeur est connecté à une sortie OUTm de lecture la mémoire MEM, par l'intermédiaire du registre B2, pour recevoir à chaque cycle d'horloge une nouvelle instruction à traiter.

La banque SBANK contient divers registres de travail, par exemple seize registres R0 à R15 (non représentés). La banque SBANK comporte une entrée IADRs pour recevoir l'adresse ADRs du registre source Rs et une entrée IADRd pour recevoir l'adresse du registre de destination Rd. La banque SBANK comporte également une sortie OUTRs de lecture du registre source Rs, une sortie OUTRd de lecture du registre de destination Rd, et une entrée INRd pour l'écriture d'un résultat dans le registre de destination Rd.

La banque HBANK comprend divers registres d'état du microprocesseur, de type classique, par exemple un registre d'état RS ("Status Register"), un registre pointeur de pile SP ("Stack Pointer"),... Ces registres ne sont pas représentés à l'exception d'un registre Rf ("Flags Register") et d'un registre PC ("Program Counter"). Le registre Rf contient classiquement les drapeaux ("flags") C, N, P, Z du microprocesseur, à savoir les drapeaux de report de somme C ("carry"), de signe N, de parité P et de valeur nulle Z. Le registre PC, ou compteur ordinal, contient l'adresse compacte ADi d'une instruction à lire dans la mémoire MEM et est incrémenté à chaque nouveau cycle d'horloge par un circuit IPC qui sera décrit plus loin.

Comme la banque SBANK, la banque HBANK est accessible en lecture ou en écriture depuis le chemin de données du microprocesseur. La banque comporte ainsi des entrées IADRs, IADRd, une sortie OUTRs et une entrée IN pour l'écriture d'un résultat dans un registre Rd ou Rs sélectionné au moyen d'un signal WRs/d délivré par le décodeur DEC1.

Les entrées IADRs, IADRd des banques SBANK, HBANK reçoivent par l'intermédiaire du décodeur DEC1 les adresses ADRs, ADRd contenues dans les instructions compactes dont le format général a été décrit plus haut. En règle générale, le décodeur DEC1 envoie les adresses ADRs, ADRd à une seule des deux banques, choisie en fonction du code $CODE_{OP}$ de l'instruction reçue. Toutefois, l'une des deux adresses ADRs, ADRd peut être envoyée à la banque SBANK et l'autre à la banque HBANK.

La mémoire MEM comporte une entrée de données INm connectée à la sortie OUTRd de la banque SBANK par l'intermédiaire des registres B4, B1. Par ailleurs, la mémoire MEM reçoit sur une entrée d'adresse IADm, par l'intermédiaire du tampon B1, des adresses étendues ADm de 32 bits délivrées par une unité MMU ("Memory Management Unit"), ou convertisseur d'adresse. Cette unité MMU reçoit elle-même en entrée l'adresse compacte ADi de 16 bits présente dans le registre PC, ou une adresse compacte ADrec délivrée par le décodeur DEC1. La sélection de l'adresse ADi ou de l'adresse ADrec à l'entrée de l'unité MMU est faite par un multiplexeur MUX1 piloté par un signal SEL1. Le fonctionnement de l'unité MMU et du multiplexeur MUX1 sera décrit plus loin.

La mémoire MEM et les banques de registres SBANK, HBANK sont commandées en lecture par un signal RDH1 et en écriture par un signal WRH2. Ces signaux sont envoyés par le décodeur DEC1. Le signal de lecture RDH1 est émis quand le signal d'horloge H1 passe à 1 et le signal d'écriture WRH2 est émis quand le signal H2 passe à 1. Les banques SBANK, HBANK appartiennent ainsi, en lecture, au premier secteur ST21 de l'étage ST2 et, en écriture, au deuxième secteur ST22 de l'étage ST2. Egalement, la mémoire MEM appartient en lecture (sortie OUTm) au secteur ST11 de l'étage ST1 et en écriture (entrée INm) au secteur ST22 de l'étage ST2.

L'unité ALU comporte ici deux entrées IN1, IN2, une sortie OUT de résultat, et une sortie OUTC délivrant le drapeau C ("carry"). L'entrée IN1 est connectée à la sortie OUTRd de la banque SBANK. L'entrée IN2 est connectée à la sortie d'un multiplexeur MUX2 piloté par un signal SEL2, recevant sur deux de ses entrées la sortie OUTRs de la banque SBANK et la sortie OUTRs de la banque HBANK. La sortie du multiplexeur MUX2 est par ailleurs connectée à l'entrée d'un multiplexeur MUX3 du type 16/1, dont le rôle est de sélectionner un bit $b_i$ parmi seize bits reçus en entrée. Le multiplexeur MUX3 est piloté par un signal ADBi codé sur quatre bits, représentant l'adresse ou rang du bit à sélectionner, délivré par le décodeur DEC1 sur réception d'une instruction spéciale qui sera décrite plus loin.

Le circuit BSHIFT comprend seize entrées de bits $e_0$ à $e_{15}$ connectées à la sortie OUT de l'unité ALU, une entrée auxiliaire $e_{16}$ et seize sorties de bits $s_0$ à $s_{15}$. L'entrée auxiliaire $e_{16}$ reçoit la sortie d'un multiplexeur MUX4 piloté par un signal SEL4. Le multiplexeur MUX4 reçoit en entrée un bit de valeur 0, un bit de valeur 1, les drapeaux C, N, P, Z du microprocesseur, et la sortie (bit bi) du multiplexeur MUX3. Les sorties $s_0$ à $s_{15}$ sont transférées par l'intermédiaire du registre B4 dans le secteur ST22 pour former un bus 10 de terminaison du chemin de données du microprocesseur. Le bus 10 est renvoyé à l'entrée INRd de la banque SBANK et à l'entrée IN de la banque HBANK. Le bus 10 est également connecté par l'intermédiaire du registre B3 à une troisième entrée du multiplexeur MUX2.

Le circuit BSHIFT peut être inhibé ou actif. Dans l'état inhibé, le circuit BSHIFT est transparent et les sorties $s_{15}$ à $s_0$ recopient les entrées $e_{15}$ à $e_0$. Dans l'état actif, le circuit BSHIFT décale ses sorties relativement à ses entrées. Les sorties $s_{14}$ à $s_0$ recopient les entrées $e_{15}$ à $e_1$, respectivement, et la sortie $s_{15}$ recopie l'entrée auxiliaire $e_{16}$. L'entrée $e_0$ est dans ce cas déconnectée du chemin de données.

Le circuit BSHIFT comporte également une sortie OUTF délivrant les quatre drapeaux C, N, P, Z du microprocesseur après chaque opération réalisée. A cet effet, le bit C délivré par l'unité ALU est appliqué sur une entrée INC du circuit BSHIFT. La sortie OUTF recopie le bit C délivré par l'unité ALU lorsque le circuit BSHIFT est transparent. Quand le circuit BSHIFT décale ses sorties, le bit C délivré par la sortie OUTF est le bit présent sur l'entrée $e_0$. La sortie OUTF est envoyée par l'intermédiaire du registre B4 sur l'entrée du registre Rf de la banque HBANK, pour le stockage des drapeaux, et en entrée du multiplexeur MUX4, pour l'injection éventuelle d'un drapeau dans le chemin de données.

L'unité ALU et le circuit BSHIFT sont pilotés par un décodeur DEC2 recevant du décodeur DEC1 le code $CODE_{OP}$ de l'opération à exécuter (lorsque l'instruction reçue est relative à une opération arithmétique ou logique). Ce code est transféré au décodeur DEC2 par l'intermédiaire du registre B3 pour la bonne synchronisation des étages pipeline.

Finalement, il ressort de ce qui précède que le résultat d'une opération faite dans le secteur ST21 peut être enregistré, selon l'instruction reçue :

(i) - dans le registre de destination Rd de la banque SBANK, dont l'adresse ADRd est donnée par l'instruction,
(ii) - dans l'un des registres Rs, Rd de la banque HBANK, dont les adresses sont données par l'instruction, la sélection étant faite au moyen du signal WRs/d.

Le cas (i) est le plus général et correspond à l'exécution d'instructions arithmétiques ou logiques dont des exemples sont donnés ci-après. Le cas (ii) permet de manipuler les registres hardware et ne sera pas décrit ci-après dans un souci de simplicité. Il appartient à l'homme de l'art de prévoir des instructions autres que celles décrites ci-après à titre d'exemple, afin d'exploiter toutes les possibilités qu'offre le microprocesseur selon l'invention.

Le résultat d'une opération peut aussi être réinjecté dans le chemin de données grâce au multiplexeur MUX2. Enfin, le contenu d'un registre de la banque SBANK peut être enregistré dans la mémoire MEM, comme on le verra plus loin.

Comme cela apparaîtra clairement à l'homme de l'art, le microprocesseur selon l'invention est d'une structure particulièrement simple qui garantit une faible consommation de courant. Une mesure supplémentaire pour limiter la consommation électrique consiste à disposer sur les sorties OUTRs, OUTRd des banques HBANK, SBANK des registres tampons pilotés par un signal H1' décalé d'une durée $\Delta t$ relativement au signal H1. De cette manière, l'unité ALU n'est connectée aux sorties OUTRs, OUTRd qu'au moment ou celles-ci sont stabilisées. Le signal décalé H1' peut être obtenu simplement au moyen d'un circuit à retard, par exemple des portes inverseuses en cascade.

On décrira maintenant l'exécution de certaines instructions, choisies à titre d'exemple pour illustrer le fonctionnement du microprocesseur.

### Exécution d'instructions de type arithmétique ou logique

Le format général de ces instructions a déjà été décrit plus haut. On se référera par exemple à la séquence d'instructions suivante :

    (1) **SUB R1, R2** (soustraire R2 à R1 et stocker le résultat dans R1)
    (2) **OR R0, R1** (faire le OU logique bit à bit de R0 et R1 et stocker le résultat dans R0.

Ces instructions sont délivrées par la mémoire MEM sous la forme suivante :

| $CODE_{SUB}$ | ADR1 | ADR2 | - |
|---|---|---|---|

| $CODE_{OR}$ | ADR0 | ADR1 | - |
|---|---|---|---|

La séquence est exécutée par le microprocesseur selon des étapes 1.1 à 1.4 et 2.1 à 2.4 décrites ci-après, qui se chevauchent comme indiqué dans le tableau 1 donné plus haut. Les diverses opérations réalisées au cours de chacune de ces étapes se déroulent de façon asynchrone selon le flot des données à travers les éléments du microprocesseur, et sont considérées comme achevées à la fin de chaque étape.

**1.1 -** Lecture de l'instruction "SUB R1,R2" (H1 = 1, H2 = 0, tampon B1 transparent, secteur ST11 actif). Ici, le décodeur DEC1 émet le signal RDH1 et l'instruction est lue dans la mémoire MEM.

**1.2 -** Décodage de l'instruction (H1 = 0, H2 = 1, registre B2 déclenché, secteur ST12 actif). Ici, le décodeur DEC1 décode l'instruction, positionne le signal SEL2 de commande du multiplexeur MUX2, envoie les adresses ADR1, ADR2 vers la banque SBANK et le code opération $CODE_{SUB}$ de la soustraction vers le décodeur DEC2.

**1.3 -** Lecture des registres et exécution de l'instruction (H1 = 1, H2 = 0, registre B3 déclenché, secteur ST21 actif). La banque SBANK reçoit les adresses ADR1, ADR2, le décodeur DEC2 reçoit le code $CODE_{SUB}$ et le décodeur DEC1 émet le signal de lecture RDH1. Les registres R1, R2 sont lus et leur contenu est appliqué sur les entrées IN1, IN2 de l'unité ALU qui délivre le résultat de la soustraction [R1-R2].

**1.4 -** Enregistrement du résultat (H1 = 0, H2 = 1, registre B4 transparent, secteur ST22 actif). Le décodeur DEC1 applique le signal d'écriture WRH2 à la banque SBANK. Le circuit BSHIFT est transparent, le résultat de la soustraction [R1-R2] se retrouve sur l'entrée INRd de la banque SBANK et est enregistré dans le registre R1.

**2.1 -** Lecture de l'instruction "OR R0,R1". Cette étape est identique à l'étape 1.1.

**2.2 -** Décodage de l'instruction. Cette étape est identique à l'étape 1.2.

**2.3** - Exécution de l'instruction. Cette étape est identique à l'étape 1.3. Les registres source et destination sont maintenant R1, R0 et l'unité ALU est configurée par le décodeur DEC2 pour réaliser le OU logique bit à bit des mots contenus dans ces registres.

**2.4** - Enregistrement du résultat. Cette étape est identique à l'étape 1.4, le registre de destination du résultat étant maintenant le registre R0.

Bien entendu, d'autres instructions arithmétiques ou logiques peuvent être mises en oeuvre. Par exemple, des opérations comme la division ou la multiplication nécessitant de façon classique divers décalage de bits, peuvent être réalisées au moyen du circuit à décalage BSHIFT. Ce circuit être prévu pour effectuer en une seule opération un décalage à gauche ou à droite de plusieurs rang de bits. Par ailleurs, on voit que l'entrée $e_{16}$ du circuit BSHIFT et le multiplexeur MUX4 permettent d'injecter dans le résultat un drapeau C, P, N, Z du résultat précédent, ou une valeur prédéterminée à 1 ou à 0. De plus, comme le bus 10 est renvoyé sur une entrée du multiplexeur MUX2, des opérations répétitives peuvent être enchaînées sans qu'il soit nécessaire d'enregistrer à chaque étape dans le registre de destination un résultat intermédiaire.

**Incrémentation du compteur ordinal et exécution d'instructions de saut ou de branchement.**

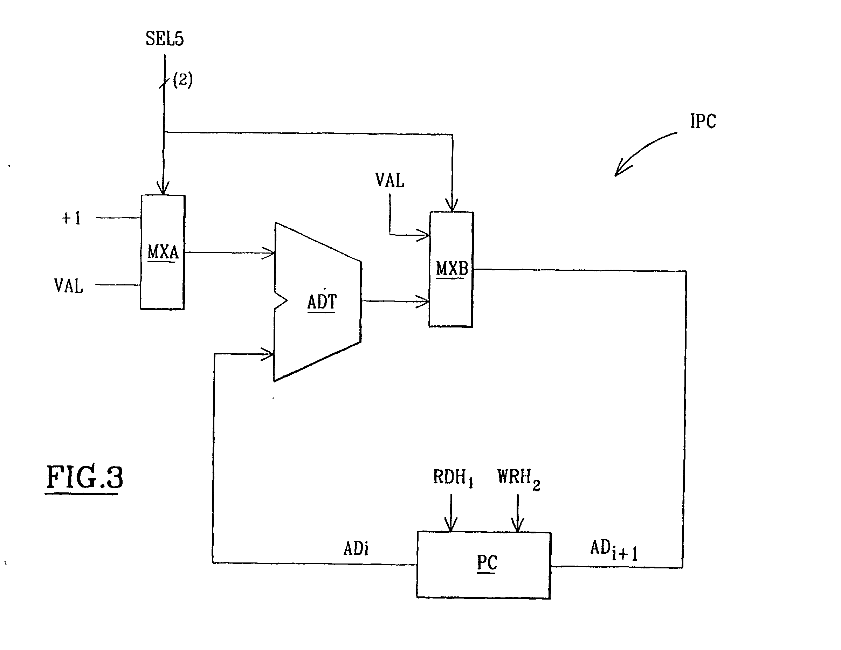

La figure 3 représente de façon plus détaillée le circuit IPC d'incrémentation du registre PC, ou compteur ordinal. Le circuit IPC comprend un additionneur ADT et deux multiplexeurs MXA, MXB. Le multiplexeur MXA reçoit en entrée un bit de valeur 1, représentant ici la valeur normale d'incrémentation du registre PC, et une adresse VAL sur 16 bits. L'additionneur ADT reçoit sur ses entrées l'adresse courante $AD_i$ contenue dans le registre PC et la sortie du multiplexeur MXA. La sortie de l'additionneur ADT est appliquée en entrée du multiplexeur MXB, dont l'autre entrée reçoit la valeur VAL. La sortie du multiplexeur MXB délivre une adresse $AD_{i+1}$ sur l'entrée du registre PC. Les multiplexeurs MXA, MXB sont pilotés par un signal de sélection SELS à trois états délivré par le décodeur DEC1.

Ainsi, l'adresse $AD_{i+1}$ délivrée par le circuit IPC peut être égale à $AD_i$ + 1 (incrément d'une unité), ADi + VAL (saut du compteur ordinal), ou VAL (branchement du compteur ordinal). L'incrément d'une unité correspond ici à l'incrémentation normale du compteur ordinal. Le saut de valeur ou le branchement est effectué lorsque le décodeur DEC1 reçoit des instructions du type JMP (saut) ou CALL (branchement), qui peuvent être prévues selon le format suivant :

| $CODE_{JMP}$ | - | - | VAL |
|---|---|---|---|

| $CODE_{CALL}$ | - | - | VAL |
|---|---|---|---|

A chaque activation du secteur ST11, l'adresse courante $AD_i$ est lue dans le registre PC par application du signal RDH1. La nouvelle adresse $AD_{i+1}$ délivrée par le circuit IPC est enregistré dans le registre PC par application du signal WRH2 quand le secteur ST12 est actif. Pour faciliter la synchronisation de ces opérations, on peut transférer une partie des fonctionnalités du décodeur DEC1 dans le secteur ST11, par exemple sous la forme d'un circuit de prédécodage, de manière que les instructions du type JMP ou CALL soient prédécodées dans le secteur ST11.

Comme on l'a déjà indiqué, l'adresse courante $AD_1$ est codée sous 16 bits et est appliquée à l'unité MMU qui la convertit au format des adresses de la mémoire MEM, par exemple 32 bits. L'unité MMU convertit l'adresse $AD_1$ de façon classique, par concaténation ou par addition avec une adresse offset OFFAD de 32 bits. Sur la figure 2, l'unité MMU est un additionneur recevant en entrée l'adresse ADi et l'adresse OFFAD. L'adresse offset peut être stockée dans un registre de la banque HBANK pour pouvoir être modifiée de façon dynamique pendant l'exécution d'un programme.

**Exécution d'une instruction de chargement d'un résultat dans la mémoire**

En commutant le multiplexeur MUX1 au moyen du signal SEL1, le décodeur DEC1 peut par ailleurs aiguiller sur l'entrée de l'unité MMU une adresse ADrec délivrée par le décodeur DEC1. Cette adresse est extraite d'une instruction de chargement REC qui peut être prévue sous le format suivant :

| $CODE_{REC}$ | ADRs | ADrec |
|---|---|---|

Cette instruction désigne un registre Rs dans l'une des banques SBANK, HBANK, dont le contenu doit être enregistré dans la mémoire MEM à l'adresse logique ADrec. La distinction entre les banques SBANK, HBANK est faite par le code $CODE_{REC}$ qui peut revêtir plusieurs valeurs. L'instruction REC est lue et décodé en un cycle d'horloge dans l'étage ST1, puis exécutée en un cycle d'horloge dans l'étage ST2. Plus particulièrement, le registre Rs est lu pendant l'activation du secteur ST21 et son contenu est enregistré dans la mémoire (entrée INm) pendant l'activation du secteur ST22. Dans ce cas particulier, le fonctionnement pipeline doit être temporairement interrompu. En effet, la mémoire ne peut simultanément enregistrer une valeur présente dans le secteur ST22 et lire une nouvelle instruction dans le secteur ST11. Une solution permettant de ne pas interrompre la chaîne pipeline consiste à prévoir une mémoire de données distincte de la mémoire programme, appartenant exclusivement à l'étage ST1 en lecture et en écriture.

Quoi qu'il en soit, on voit que la priorité est donnée à l'exécution dans l'étage ST2 d'opérations en boucle fermée faisant intervenir les registres du microprocesseur. Cette caractéristique est un aspect de l'invention qui permet d'obtenir une grande rapidité de traitement des instructions avec une architecture de microprocesseur particulièrement simple et d'encombrement réduit. De plus, cette caractéristique convient particulièrement bien aux programmes chargés dans les cartes à puce, qui comprennent des séquences d'opérations répétitives avant le chargement d'un résultat en mémoire.

Parmi ces opérations répétitives figure notamment l'opération de concaténation de bits, qui intervient dans l'exécution des algorithmes de cryptographie permettant de générer les codes d'authentification des cartes à puces. Cette opération sera maintenant décrite.

**Exécution d'une instruction spéciale de concaténation de bits**

Avantageusement, le microprocesseur est également organisé pour exécuter une instruction de concaténation BMV, par exemple selon le format suivant :

| $CODE_{BMV}$ | ADRd | ADRs | ADbi |
|---|---|---|---|

Cette instruction comprend le code $CODE_{BMV}$ de l'opération de concaténation, sur 4 bits, l'adresse ADRd du registre Rd de destination du résultat de la concaténation, sur 4 bits, l'adresse ADRs d'un registre source Rs, sur 4 bits, et le rang $ADb_i$ d'un bit $b_1$ du registre source Rs.

Cette instruction signifie ici, de façon non limitative :

1) concaténer ("coller") le bit $b_1$ d'un mot binaire W1 contenu dans le registre Rs avec le bit de plus fort poids d'un mot binaire W2 contenu dans le registre Rd,

2) enregistrer le mot W3 résultat de la concaténation dans le registre Rd.

Elle est traitée en quatre étapes de lecture 1.1, décodage 1.2, exécution 1.3 et enregistrement 1.4 du type décrit plus haut, soit en deux cycles d'horloge H1 et un seul cycle pipeline. Au cours de l'étape de décodage 1.2, le décodeur DEC1 envoie les adresses ADRs, ADRd vers la banque SBANK, l'adresse $ADb_1$ du bit bi vers le multiplexeur MUX3, le code $CODE_{BMV}$ vers décodeur DEC2, et les signaux de commande SEL2, SEL4 vers les multiplexeurs MUX2, MUX4. Au cours de l'étape d'exécution 1.3 (registre B3 déclenché) la sortie OUTRs de la banque SBANK est connectée à l'entrée du multiplexeur MUX3 dont la sortie est connectée à l'entrée $e_{16}$ du circuit BSHIFT. Le mot binaire W1 contenu dans le registre Rs est appliqué sur l'entrée du multiplexeur MUX3 et le mot binaire W2 contenu dans le registre Rd est appliqué sur l'entrée IN1 de l'unité ALU. Ici, l'unité ALU est transparente et recopie le mot W2 sur sa sortie OUT. Le multiplexeur MUX3 délivre un bit $b_{12}$ du mot W1 sur l'entrée auxiliaire $e_{16}$. Le circuit BSHIFT effectue un décalage à droite et délivre un mot binaire W3 du type :

$$W3 = b_{12} \ d_{15} \ d_{14} \ d_{13} \ d_{12} \ d_{11} \ d_{10} \ d_9 \ d_8 \ d_7 \ d_6 \ d_5 \ d_4 \ d_3 \ d_2 \ d_1$$

dans lequel le bit de plus fort poids est le bit $b_{12}$ sélectionné dans le mot W1. Les autres bits du mot W3 sont des bits $d_{15}$ à $d_1$ du mot W2, le bit de plus faible poids $d_0$ ayant été supprimé du résultat par le décalage (ce bit $d_0$ est alors délivré en tant que drapeau C sur la sortie OUTF du circuit BSHIFT). Le mot W3 est enregistré dans le registre Rd au cours de la dernière étape 1.4.

Pour fixer les idées sur les avantages de cette instruction, le tableau 2 ci-après décrit la séquence de concaténation suivante :

"Concaténer dans R0 = 1010 1010 1010 1010 (état initial)
le bit 12 de R1 = 000**1** 0010 0011 0100,
puis le bit 0 de R2 = 0010 0011 0100 010**1,**
puis le bit 14 de R3 = 0**0**11 0100 0101 0110,
puis le bit 2 de R1 = 0001 0010 0011 0**1**00".

| Tableau 2 | | | | | R E G I S T R E   R 0 | | | | | | | | | | | | | | | |
|---|---|---|---|---|---|---|---|---|---|---|---|---|---|---|---|---|---|---|---|---|
| Bits (rang) | | | | | 15 | 14 | 13 | 12 | 11 | 10 | 9 | 8 | 7 | 6 | 5 | 4 | 3 | 2 | 1 | 0 |
| R0 initial | | | | | 1 | 0 | 1 | 0 | 1 | 0 | 1 | 0 | 1 | 0 | 1 | 0 | 1 | 0 | 1 | 0 |
| BMV R0,R1,12 | | | | **1** | 1 | 0 | 1 | 0 | 1 | 0 | 1 | 0 | 1 | 0 | 1 | 0 | 1 | 0 | 1 | *0* |
| BMV R0,R2,0 | | | **1** | **1** | 1 | 0 | 1 | 0 | 1 | 0 | 1 | 0 | 1 | 0 | 1 | 0 | 1 | 0 | *1* | *0* |
| BMV R0,R3,14 | | **0** | **1** | **1** | 1 | 0 | 1 | 0 | 1 | 0 | 1 | 0 | 1 | 0 | 1 | 0 | 1 | *0* | *1* | *0* |
| BMV R0,R1,2 | **1** | **0** | **1** | **1** | 1 | 0 | 1 | 0 | 1 | 0 | 1 | 0 | 1 | 0 | 1 | 0 | *1* | *0* | *1* | *0* |

Les bits concaténés dans le registre R0 sont en caractères gras. Les bits en italiques sont les bits de poids faible perdus par décalage à droite. Au total, la concaténation des quatre bits ne nécessite que quatre cycles d'horloge pipeline et un programme de quatre instructions seulement.

Il apparaîtra clairement à l'homme de l'art que le microprocesseur selon l'invention est susceptible de nombreuses variantes de réalisation et perfectionnements.

A titre d'exemple, on a représenté en figure 2 un fil 20 reliant le décodeur DEC2 à une quatrième entrée du multiplexeur MUX2. Cette connexion permet au décodeur DEC2 d'injecter à l'entrée du secteur ST21 une donnée de 8 bits, dite "donnée immédiate", extraite d'une l'instruction lue dans la mémoire MEM.

Comme autre exemple de variante, on a représenté en traits pointillés sur la figure 2 un multiplexeur MUX5 interposé entre la sortie OUT de l'unité ALU et l'entrée du circuit BSHIFT. Ce multiplexeur a une entrée connectée à la sortie OUTm de la mémoire MEM et permet d'injecter directement dans le circuit BSHIFT une donnée stockée en mémoire.

D'autre part, il est bien évident que le circuit BSHIFT peut être conçu pour réaliser aussi bien des décalages à droite que des décalages à gauche.

Egalement, l'agencement des registres B1 à B4 représenté en figure 2 n'est pas impératif, le fonctionnement pipeline selon l'invention pouvant être obtenu de diverses manières. Par exemple, le registre B3 peut être supprimé si le décodeur DEC1 synchronise lui-même le transfert des données (ADRs, ADRd, ADbi, CODE$_{OP}$) et signaux de contrôle (SEL2, SEL4) au secteur ST21. Dans ce cas, le registre B3 est implicitement contenu dans le décodeur DEC1. Egalement, le registre B1 peut, en pratique, être intégré à l'unité MMU et au circuit IPC.

Par ailleurs, il est bien évident que certains éléments du microprocesseur sont facultatifs. Par exemple, le choix d'une mémoire plus réduite recevant des adresses de 16 bits ou d'un microprocesseur fonctionnant sur 32 bits rendrait l'unité MMU inutile.

Enfin, il apparaîtra clairement à l'homme de l'art que le terme "demi-cycle d'horloge" ne doit pas être interprété de façon limitative. En effet, à vitesse de fonctionnement constante, il est équivalent de prévoir un signal d'horloge ayant une vitesse double et de n'activer les secteurs pipeline qu'un cycle d'horloge sur deux, en décalant d'un cycle d'horloge l'activation de chaque secteur relativement au secteur suivant. Pour chaque registre pipeline B1 à B4, la sélection d'un bit d'horloge sur deux comme signal de commande peut être faite de façon simple au moyen d'un circuit diviseur de fréquence, par exemple une bascule D dont la sortie /Q est ramenée sur l'entrée D. Les signaux de commandes des registres pipeline peuvent par ailleurs être combinés dans des portes OU Exclusif avant d'être appliqués, afin de garantir que deux secteurs complémentaires d'un même étage pipeline ne seront pas activés simultanément.

De façon générale, on a décrit dans ce qui précède un microprocesseur simplifié ne comprenant que les éléments nécessaires à la description et la compréhension des aspect essentiels de l'invention. Il est à la portée de l'homme de l'art d'ajouter au microprocesseur de l'invention divers autres éléments, et particulièrement les éléments classiques intervenant dans le fonctionnement des microprocesseurs comme des circuits de génération et de traitement de signaux d'interruptions, des circuits d'horloge, des circuits contrôleurs de bus, des entrées/sorties...

## Revendications

1.   Microprocesseur pipeline (MP) comprenant des moyens de lecture (IPC, MMU, PC, B2, DEC1) et des moyens de décodage (DEC1) d'instructions d'un programme enregistré dans une mémoire (MEM), une banque de registres (SBANK, HBANK) et des moyens (DEC2, ALU, BSHIFT, MUX2, MUX3, MUX4) de calcul et de traitement de données, **caractérisé en ce que** :

   -   les moyens de lecture (IPC, MMU, PC, B2, DEC1) et les moyens de décodage (DEC1) sont agencés dans un premier étage pipeline (ST1),

- les moyens (DEC2, ALU, BSHIFT, MUX2, MUX3, MUX4) de calcul et de traitement sont agencés dans un premier secteur (ST21) d'un deuxième étage pipeline (ST2) contigu au premier étage pipeline, ledit premier secteur (ST21) étant activé pendant un premier demi-cycle d'un signal d'horloge (H1) du microprocesseur,
- la banque de registres (SBANK, HBANK) est agencée en lecture (RDH1) dans le premier secteur (ST21) du deuxième étage pipeline (ST2), et
- la banque de registres (SBANK, HBANK) est agencée en écriture (WRH2) dans un deuxième secteur (ST22) du deuxième étage pipeline (ST2), ledit deuxième secteur (ST22) étant activé pendant un deuxième demi-cycle d'horloge (H1).

2. Microprocesseur selon la revendication 1, dans lequel la mémoire (MEM) est agencée en écriture (WRH2, INm) dans le deuxième secteur (ST22) du deuxième étage pipeline (ST2).

3. Microprocesseur selon l'une des revendications 1 et 2, dans lequel le premier étage pipeline (ST1) comprend deux secteurs (ST11, ST12) activés pendant des demi-cycles complémentaires du signal d'horloge (H1), le premier secteur (ST11) du premier étage pipeline comprenant les moyens (IPC, MMU, PC, B2) de lecture des instructions dans la mémoire, le deuxième secteur (ST12) du premier étage pipeline comprenant les moyens (DEC1) de décodage des instructions.

4. Microprocesseur selon l'une des revendications 1 à 3, dans lequel le premier secteur (ST21) du deuxième étage pipeline (ST2) comprend une unité arithmétique et logique (ALU) et un circuit à décalage (BSHIFT).

5. Microprocesseur selon l'une des revendications 1 à 4, dans lequel les moyens de calcul et de traitement comprennent des moyens (BSHIFT, MUX2, MUX3, MUX4) pour réaliser en un demi-cycle d'horloge une opération (BMV, $CODE_{BMV}$) de concaténation d'un bit (bi) d'un premier mot binaire (W1) avec des bits d'un deuxième mot binaire (W2).

6. Microprocesseur selon l'une des revendications 1 à 5, dans lequel les moyens (DEC1) de lecture et de décodage sont agencés pour décoder des instructions compactes comprenant un code instruction ($CODE_{OP}$), une adresse (ADRs) d'un premier registre(Rs) et une adresse (ADRd) d'un second registre (Rd) de la banque de registres.

7. Procédé de traitement d'une instruction ($CODE_{OP}$, ADRd, ADRs) lue dans une mémoire (MEM) par un microprocesseur (MP) comprenant une banque de registres (SBANK, HBANK), des moyens (IPC, MMU, PC, B2, DEC1) de décodage de l'instruction, et des moyens (DEC2, ALU, BSHIFT, MUX2, MUX3, MUX4) d'exécution de l'instruction, **caractérisé en ce qu'**il comprend :

- une première étape (1.2) d'extraction d'une première adresse (ADRs), d'une deuxième adresse (ADRd), et d'un code opération ($CODE_{OP}$) contenus dans l'instruction, d'une durée maximale d'un cycle d'horloge (H1) du microprocesseur,
- une deuxième étape (1.3) de lecture (RDH1) simultanée d'un premier (Rs) et d'un second (Rd) registres de la banque de registres identifiés par les adresses extraites de l'instruction au cours de la première étape, et de réalisation à partir du contenu des registres d'une opération (OP, BMV, ADD, OR) arithmétique ou logique identifiée par le code opération ($CODE_{OP}$) de l'instruction, d'une durée d'un demi-cycle d'horloge, et
- une troisième étape (1.4) d'enregistrement du résultat de l'opération dans un registre (Rd) de la banque de registres (SBANK, HBANK), d'une durée d'un demi-cycle d'horloge (H1).

8. Procédé selon la revendication 7, dans lequel le résultat est enregistré dans l'un desdits premier et second registres.

## Claims

1. Pipeline microprocessor (MP) comprising reading means (IPC, MMU, PC, B2, DEC1) and means (DEC1) for decoding instructions from a program stored in a memory (MEM), a register bank (SBANK, HBANK) and means (DEC2, ALU, BSHIFT, MUX2, MUX3, MUX4) for calculating and processing data, **characterised in that** :

- the reading means (IPC, MMU, PC, B2, DEC1) and the decoding means (DEC1) are arranged in a first pipeline stage,

- the calculating and processing means (DEC2, ALU, BSHIFT, MUX2, MUX3, MUX4) are arranged in a first sector (ST21) of a second pipeline stage (ST2) contiguous with the first pipeline stage, the said first sector (ST21) being activated during a first half-cycle (H1) of a clock signal from the microprocessor,
- the register bank (SBANK, HBANK) is arranged in reading mode (RDH1) in the first sector (ST21) of the second pipeline stage (ST2), and
- the register bank (SBANK, HBANK) is arranged in writing mode (WRH2) in a second sector (ST22) of the second pipeline stage (ST2), the said second sector (ST22) being activated during a second clock half-cycle (H1).

2. Microprocessor according to Claim 1, in which the memory (MEM) is arranged in writing mode (WRH2, INm) in the second sector (ST22) of the second pipeline stage (ST2).

3. Microprocessor according to one of Claims 1 and 2, in which the first pipeline stage (ST1) comprises two sectors (ST11), ST12) activated during complementary half-cycles of the clock signal (H1), the first sector (ST11) of the first pipeline stage comprising means (IPC, MMU, PC, B2) for reading instructions in the memory, the second sector (ST12) of the first pipeline stage comprising means (DEC1) for decoding instructions.

4. Microprocessor according to one of Claims 1 to 3, in which the first sector (ST21) of the second pipeline stage (ST2) comprises an arithmetic and logic unit (ALU) and a shift circuit (BSHIFT).

5. Microprocessor according to one of Claims 1 to 4, in which the calculating and processing means comprise means (BSHIFT, MUX2, MUX3, MUX4) for achieving, in one clock half-cycle, an operation of concatenation (BMV, $CODE_{BMV}$) of a bit (bi) from a first binary word (W1) with bits from a second binary word (W2).

6. Microprocessor according to one of Claims 1 to 5, in which the reading and decoding means (DEC1) are arranged to decode compact instructions comprising an instruction code (CODE), an address (ADRs) of a first register (Rs) and an address (ADRd) of a second register (Rd) of the register bank.

7. Process for handling an instruction ($CODE_{OP}$, ADRd, ADRs) read in a memory (MEM) by a microprocessor (MP) comprising a register bank (SBANK, HBANK), instruction decoding means (IPC, MMU, PC, B2, DEC1), and means (DEC2, ALU, BSHIFT, MUX2, MUX3, MUX4) for executing the instruction, **characterised in that** it comprises :

   - a first step (1.2) of extracting a first address (ADRs), a second address (ADRd), and an operating code ($CODE_{OP}$) contained in the instruction, of a maximum duration of one clock cycle (H1) of the microprocessor,
   - a second step (1.3) of reading (RDH1) simultaneously from a first (Rs) and from a second (Rd) register in the register bank identified by the addresses extracted from the instruction in the course of the first step, and the achievement, starting from the contents of the register, of an arithmetic or logic operation (OP, BMV, ADD, OR) identified by the operating code ($CODE_{OP}$) of the instruction, of a duration of one clock half-cycle, and
   - a third step (1.4) of storing the result of the operation in a register (Rd) of the register bank (SBANK, HBANK), of a duration of one clock half-cycle (H1).

8. Process according to Claim 7, in which the result is stored in the said first and second registers.

**Patentansprüche**

1. Mikroprozessor-Pipeline (MP), umfassend Mittel zum Lesen (IPC, MMU, PC, B2, DEC1) und Mittel zum Entcodieren (DEC1) von Befehlen eines Programms, das in einem Speicher (MEM) registriert ist, eine Bank aus Registern (SBANK, HBANK) und Mittel (DEC2, ALU, BSHIFT, MUX2, MUX3, MUX4) zum Berechnen und Verarbeiten von Daten,
   **dadurch gekennzeichnet, dass**

   - die Mittel zum Lesen (IPC, MMU, PC, B2, DEC1) und die Mittel zum Entcodieren (DEC1) in einer ersten Stufen-Pipeline (ST1) angeordnet sind,
   - die Mittel (DEC2, ALU, BSHIFT, MUX2, MUX3, MUX4) zum Berechnen und Verarbeiten in einem ersten Sektor (ST21) einer zweiten Stufen-Pipeline (ST2) angeordnet sind, die an die erste Stufen-Pipeline angrenzt, wobei der genannte erste Sektor (ST21) während eines ersten Halb-Zyklus eines Zeitsignals (H1) des Mikroprozessors aktiviert wird,

- die Bank aus Registern (SBANK, HBANK) beim Lesen (RDH1) im ersten Sektor (ST21) der zweiten Stufen-Pipeline (ST2) und
- die Bank aus Registern (SBANK, HBANK) beim Schreiben (WRH2) in einem zweiten Sektor (ST22) der zweiten Stufen-Pipeline (ST2) eingesetzt wird, wobei der genannte zweite Sektor (ST22) während eines zweiten Halb-Zyklus des Zeitsignals (H1) aktiviert wird.

2. Mikroprozessor gemäß Anspruch 1, wobei der Speicher (MEM) beim Schreiben (WRH2, INm) im zweiten Sektor (ST22) der zweiten Stufen-Pipeline (ST2) eingesetzt wird.

3. Mikroprozessor gemäß einem der Ansprüche 1 und 2, worin die erste Stufen-Pipeline (ST1) zwei Sektoren (ST11, ST12) umfasst, die während komplementären Halb-Zyklen des Zeitsignals (H1) aktiviert werden, worin der erste Sektor (ST11) der ersten Stufen-Pipeline die Mittel (IPC, MMU, PC, B2) zum Lesen der Befehle im Speicher und der zweite Sektor (ST12) der ersten Stufen-Pipeline die Mittel (DEC1) zum Entcodieren der Befehle enthalten.

4. Mikroprozessor gemäß einem der Ansprüche 1 bis 3, worin der erste Sektor (ST21) der zweiten Stufen-Pipeline (ST2) eine arithmetische und logische Einheit (ALU) und einen Shift-Schaltkreis (BSHIFT) aufweist.

5. Mikroprozessor gemäß einem der Ansprüche 1 bis 4, worin die Mittel zum Berechnen und Verarbeiten Mittel (BSHIFT, MUX2, MUX3, MUX4) umfassen, um in einem Halb-Zyklus eines Takts eine Maßnahme (BMV, $CODE_{BMV}$) zur Verkettung eines Bit (bi) eines ersten binären Worts (W1) mit Bits eines zweiten binären Worts (W2) durchzuführen.

6. Mikroprozessor gemäß einem der Ansprüche 1 bis 5, worin die Mittel (DEC1) zum Lesen und Entcodieren eingerichtet sind, um kompakte Befehle zu entcodieren, die einen Befehlscode ($CODE_{OP}$), eine Adresse (ADRs) eines ersten Registers (Rs) und eine Adresse (ADRd) eines zweiten Registers (Rd) der Bank aus Registern umfassen.

7. Verfahren zur Verarbeitung eines Befehls ($CODE_{OP}$, ADRd, ADRs), der in einem Speicher (MEM) von einem Mikroprozessor gelesen wird, der eine Bank aus Registern (SBANK, HBANK), Mittel (IPC, MMU, PC, B2, DEC1) zum Entcodieren des Befehls und Mittel (DEC2, ALU, BSHIFT, MUX2, MUX3, MUX4) zum Ausüben des Befehls umfasst,
**dadurch gekennzeichnet, dass** es Stufen aufweist, in denen man:

- in einer ersten Stufe (1.2) eine erste Adresse (ADRs), eine zweite Adresse (ADRd) und einen Betriebscode ($CODE_{OP}$), die im Befehl enthalten sind, während einer Maximaldauer eines Zeittaktzyklus (H1) des Mikroprozessors entnimmt,
- in einer zweiten Stufe (1.3) gleichzeitig die Lektüre (RDH1) eines ersten (Rs) und eines zweiten Registers (Rd) der Register-Bank, die von den Adressen identifiziert werden, die den Befehl im Laufe der ersten Stufe entnommen werden, und, ausgehend vom Inhalt der Register, eine arithmetische oder logische Maßnahme (OP, BMV, ADD, OR), die vom Betriebscode ($CODE_{OP}$) identifiziert wird, während einer Dauer eines Halb-Zyklus eines Zeittakts durchführt, und man
- in einer dritten Stufe (1.4) das Ergebnis der Maßnahme in ein Register (Rd) der Register-Bank (SBANK, HBANK) während eines Halb-Zyklus des Zeittakts (H1) einträgt.

8. Verfahren gemäß Anspruch 7, wobei das Ergebnis in eines der genannten ersten und zweiten Register eingetragen wird.

EP 1 027 644 B1

FIG.1

**FIG.2**

SEL5

(2)

IPC

VAL

+1

MXA

VAL

ADT

MXB

VAL

**FIG.3**

RDH$_1$    WRH$_2$

ADi

PC

AD$_{i+1}$